(19) Europäisches Patentamt
European Patent Office
Office européen des brevets

(11) **EP 2 793 045 B1**

(12) **EUROPÄISCHE PATENTSCHRIFT**

(45) Veröffentlichungstag und Bekanntmachung des Hinweises auf die Patenterteilung:
**04.12.2019 Patentblatt 2019/49**

(51) Int Cl.:
**G01S 11/12** *(2006.01)* **G01S 17/02** *(2006.01)*
**G06K 9/00** *(2006.01)*

(21) Anmeldenummer: **14163655.5**

(22) Anmeldetag: **07.04.2014**

(54) **Verfahren zur Überprüfung eines Umfelderfassungssystems eines Fahrzeugs**

Method for testing an environment detection system of a vehicle

Procédé de vérification d'un système de détection de l'environnement d'un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2013 DE 102013206707**

(43) Veröffentlichungstag der Anmeldung:
**22.10.2014 Patentblatt 2014/43**

(73) Patentinhaber: **ROBERT BOSCH GMBH**
**70442 Stuttgart (DE)**

(72) Erfinder:
• **Lang, Stefan**
**71636 Ludwigsburg (DE)**
• **Gussner, Thomas**
**71634 Ludwigsburg (DE)**

(56) Entgegenhaltungen:
**EP-A1- 1 462 820 EP-A1- 2 101 193**
**WO-A1-2004/072901 DE-A1- 10 229 336**
**DE-A1-102008 038 731 US-A1- 2011 116 717**
**US-A1- 2011 133 917**

• **STILLER C ET AL: "MULTISENSOR OBSTACLE DETECTION AND TRACKING", IMAGE AND VISION COMPUTING, ELSEVIER, GUILDFORD, GB, Bd. 18, Nr. 5, April 2000 (2000-04), Seiten 389-396, XP001179983, ISSN: 0262-8856, DOI: 10.1016/S0262-8856(99)00034-7**

**Beschreibung**

Stand der Technik

Die Erfindung betrifft ein Verfahren zur Überprüfung eines Umfelderfassungssystems eines Fahrzeugs, wobei das Umfelderfassungssystem mindestens zwei verschiedene Umfeldsensortypen umfasst, Objekte im Umfeld des Fahrzeugs mit einem ersten Umfeldsensortyp erfasst werden, die Objekte in statische und dynamische Objekte kategorisiert werden und wobei die Position der statischen Objekte mit der über einen zweiten Umfeldsensortyp ermittelten Position verglichen wird. Des Weiteren betrifft die Erfindung eine Vorrichtung, welche zur Ausführung des Verfahrens eingerichtet ist.

Umfelderfassungssysteme werden in modernen Fahrzeugen eingesetzt, um Daten über die Umgebung des Fahrzeugs zur Verwendung in Fahrassistenzsystemen zu gewinnen. Als Sensoren für die Umfelderfassungssysteme werden beispielsweise Ultraschall, Radar oder Lidar basierende Sensoren eingesetzt. Auch optische Systeme wie Kameras sind zur Umfelderfassung geeignet. Stereokameras erlauben dabei eine dreidimensionale bildliche Erfassung der Fahrzeugumgebung. Für eine zuverlässige dreidimensionale Erfassung der Umgebung muss eine Stereokamera zuvor kalibriert werden. Ferner dürfen sich die Parameter der Stereokamera, wie beispielsweise die Ausrichtung der beiden einzelnen Kameras zueinander, im laufenden Betrieb nicht ändern, da andernfalls bei der Berechnung der Tiefe des erfassten Bildes systematische Fehler auftreten, beispielsweise in Form einer Verzerrten 3D-Vermessung.

Aus DE 102 29 336 A1 sind ein Verfahren und eine Vorrichtung zur Kalibrierung von Bildsensorsystemen bekannt. Das zu kalibrierende Bildsensorsystem kann beispielsweise eine Stereokamera sein. Die Vorrichtung umfasst zusätzlich zum Bildsensorsystem ein weiteres Sensorsystem, beispielsweise einen Radarsensor oder einen Ultraschallsensor, dessen Erfassungsbereich mit dem des Bildsensorsystems überlappt. Zum Kalibrieren des Bildsensorsystems wird ein Kalibrierobjekt verwendet, welches in den Erfassungsbereich der beiden verschiedenen Sensorsysteme eingebracht wird. Die Messdaten der verschiedenen Sensorsysteme werden an eine Auswerteeinheit übertragen, die anschließend die Kalibrierdaten zur Kalibrierung des Bildsensorsystems ermittelt.

Aus WO 2004/072901 A1 sind ein Verfahren und eine Vorrichtung zur Echtzeithinderniserkennung bekannt, basierend auf einer kalibrierten Kamera. Dabei wird der optische Fluss in den Kamerabildern analysiert und ein Punkt in der Umgebung des Fahrzeugs ausgewählt, der sich leicht verfolgen lässt. Die Bewegung dieses Punktes in den Kamerabildern wird analysiert und mit einer über die bekannte Eigenbewegung des Fahrzeugs berechneten Bewegung des Punktes verglichen. Zur Erhöhung der Zuverlässigkeit kann das Verfahren mit weiteren Sensorsystemen, wie beispielsweise einem Ultraschallsensorsystem, kombiniert werden.

Aus DE 10 2010 051 602 A1 ist ein Verfahren zur Erfassung von Merkmalen in der Umgebung eines Fahrzeugs bekannt, wobei mindestens zwei Aufnahmen mit im Wesentlichen gleichen Ausrichtungen, jedoch unterschiedlichen Standorten einer Kamera gemacht werden. Dazu kann beispielsweise eine Stereokamera verwendet werden, die typischerweise zwei Kameras enthält. Zur Redundanzprüfung kann zusätzlich ein Laser-, Ultraschall- oder Radarsystem in Kombination mit dem Kamerasystem eingesetzt werden.

Nachteilig an den aus dem Stand der Technik bekannten Verfahren ist, dass diese für eine Überprüfung oder für eine Kalibrierung einer Kamera, insbesondere einer Stereokamera, einen weiteren Umfeldsensor benötigen, der im Wesentlichen redundante Informationen liefert. Da die Umfeldsensoren typischerweise nur einen begrenzten Sichtbereich aufweisen, müssen somit zusätzliche Sensoren verbaut werden, damit die Sichtbereiche verschiedener Sensortypen zumindest teilweise überlappen.

Aus DE 10 2008 038 731 A1 ist ein Verfahren zur Erkennung ausgedehnter statischer Objekte von einem fahrenden Fahrzeug aus bekannt. Verwendet werden eine Frontkamera und eine seitliche Erfassungseinrichtung. Fehlerhafte Sensoren werden nicht identifiziert.

Offenbarung der Erfindung

Es wird ein Verfahren zur Überprüfung eines Umfelderfassungssystems eines Fahrzeugs vorgeschlagen, wobei das Umfelderfassungssystem mindestens zwei verschiedene Umfeldsensortypen umfasst, wobei Objekte im Umfeld des Fahrzeugs mit einem ersten Umfeldsensortyp erfasst werden, die Objekte mit den Daten des ersten Umfeldsensortyps in statische und dynamische Objekte kategorisiert werden, die relative Position der erfassten statischen Objekte zum Fahrzeug bestimmt wird, diese Position mit einer über einen zweiten Umfeldsensortyp ermittelten Position verglichen wird und bei einer Abweichung über einem Grenzwert auf einen Fehler geschlossen wird, wobei der Sichtbereich des ersten Umfeldsensortyps nicht mit dem Sichtbereich des zweiten Umfeldsensortyps überlappt und die relative Position der erfassten statischen Objekte nach dem Verlassen des Sichtbereichs des ersten Umfeldsensortyps unter Berücksichtigung der Bewegung des Fahrzeugs aktualisiert wird. Das erfindungsgemäße Verfahren ist im Anspruch 1 beansprucht.

Das zu überprüfende Umfelderfassungssystem ist in einem Fahrzeug angeordnet und umfasst mindestens zwei verschiedene Typen von Umfeldsensoren. Jeder Umfeldsensor weist einen Sichtbereich auf, in dem dieser Objekte erkennen kann. Zur Erfassung der Umgebung des Fahrzeugs sind die Umfeldsensoren so verteilt am Fahrzeug angeordnet, dass deren Sichtbereiche möglichst viel der Umgebung des Fahrzeugs erfassen können. Die verschiedenen Umfeldsensortypen unterscheiden sich dabei sowohl im Öffnungswinkel ihres Sichtbereichs, als auch in der Reichweite, in der diese Objekte wahrnehmen können. Bevorzugt wird zur Erfassung von Objekten in Fahrtrichtung ein Sensortyp mit hoher Reichweite gewählt, während für die Erfassung von Objekten, die sich seitlich neben dem Fahrzeug befinden, Sensortypen mit geringer Reichweite ausreichend sind. Bevorzugt werden für die Erfassung von Objekten neben dem Fahrzeug Sensortypen ausgewählt, deren Sichtbereich einen großen Öffnungswinkel aufweist.

Eine Funktionsüberprüfung eines Sensors kann durch einen Vergleich von dessen Messergebnis mit dem eines anderen Sensors erfolgen. Dazu müssen zwei Sensoren dazu eingerichtet sein, die gleiche Größe zu messen. Im Fall eines Umfelderfassungssystems bedeutet dies dass die Position eines Objekts relativ zum Fahrzeug für einen Vergleich von zwei verschiedenen Sensoren gemessen werden muss. Wird dann bei dem Vergleich festgestellt, dass die Differenz größer als ein vorgegebener Grenzwert ist, wird auf einen Fehler im Umfelderfassungssystem geschlossen. Der Grenzwert wird bevorzugt so gewählt, dass übliche statistische Schwankungen in den Positionsbestimmungen unter dem Grenzwert liegen.

Bei dem vorgeschlagenen Verfahren werden für den Vergleich der ermittelten Positionen statische Objekte verwendet. Dabei ist es nicht erforderlich, dass das statische Objekt zeitgleich von zwei verschiedenen Umfeldsensoren erfasst wird, das heißt es ist nicht erforderlich, dass die Sichtbereiche zwei verschiedener Umfeldsensoren überlappen. Dazu werden in einem ersten Schritt des Verfahrens Objekte in der Umgebung des Fahrzeugs mit einem Umfeldsensor eines ersten Typs erfasst, wobei mit Hilfe der Daten dieses Umfeldsensors die Objekte in statische und dynamische Objekte kategorisiert werden. Statische Objekte sind unbewegliche Objekte wie beispielsweise Leitplanken, Bäume, Verkehrsschilder, Fahrbahnmarkierungen oder parkende Fahrzeuge. Dynamische Objekte sind bewegliche Objekte wie beispielsweise andere Fahrzeuge auf der Straße.

In einem zweiten Schritt des Verfahrens wird die relative Position der statischen Objekte zum Fahrzeug ermittelt. Die relative Position eines Objekts wird anschließend fortlaufend aktualisiert. Solange das Objekt noch im Sichtbereich des Sensors vom ersten Umfeldsensortyps ist, können dabei dessen Messdaten verwendet werden. Nach dem Verlassen des Sichtbereichs wird die relative Position des statischen Objekts zum Fahrzeug berechnet, wobei die bekannte Bewegung des Fahrzeugs berücksichtigt wird.

Tritt das statische Objekt in den Sichtbereich eines Sensors eines zweiten Typs ein, so wird in einem dritten Schritt des Verfahrens dessen relative Position zum Fahrzeug aus den Messdaten des zweiten Umfeldsensortyps bestimmt.

In einem vierten Schritt des Verfahrens wird die über einen Sensor eines zweiten Umfeldsensortyps ermittelte relative Position mit der Position verglichen, die anhand der Messung des ersten Sensortyps im zweiten Schritt des Verfahrens ermittelt wurde. Überschreitet die Differenz der beiden Positionen einen vorgegebenen Grenzwert, wird auf einen Fehler im Umfelderfassungssystem des Fahrzeugs geschlossen. Der Grenzwert wird bevorzugt so gewählt, dass erst bei Abweichungen die größer als die durch die Messgenauigkeit der Sensoren zu erwartenden Schwankungen sind auf eine Fehlfunktion geschlossen wird.

In dem erfindungsgemäßen Verfahren ist der erste Umfeldsensortyp eine Stereokamera.

In einer Ausführungsform erfolgt die Kategorisierung erfasster Objekte in statische und dynamische Objekte mittels Vergleichen des gemessenen optischen Flusses im Kamerabild mit dem für statische Objekte erwarteten optischen Fluss.

Der optische Fluss bezeichnet einen Bewegungsvektor, der jedem Bildpunkt eines Kamerabildes zugeordnet wird. Der Bewegungsvektor gibt dabei die Richtung und Geschwindigkeit an, in die sich der ihm zugeordnete Bildpunkt bewegt. Wird eine Kamera in einem Fahrzeug angeordnet und in Fahrtrichtung ausgerichtet und befinden sich keine beweglichen Objekte im Sichtbereich der Kamera, so weisen Bildpunkte, die weit entfernte Objekte oder weit entfernte Teile der Straße darstellen, einen geringen optischen Fluss auf sie bewegen sich im Kamerabild nur langsam. Bildpunkte hingegen, die zu nahen Objekten oder zu einem nahen Teil der Straße gehören, weisen einen großen optischen Fluss auf sie bewegen sich schnell im Kamerabild.

Zur Kategorisierung der im Kamerabild erfassten Objekte in statische und dynamische Objekte wird für jedes Objekt ein hypothetischer optischer Fluss unter der Annahme berechnet, dass das Objekt statisch ist. Stimmen der gemessene optische Fluss und der hypothetische optische Fluss bis auf einen statistischen Fehler überein, so wird das Objekt als statisch kategorisiert.

Die Berechnung des hypothetischen optischen Flusswertes $f_{stat}$ eines statischen Objekts ist abhängig von dessen Position $(x_w, y_w)$ relativ zum Fahrzeug sowie der Eigenbewegung des Fahrzeugs. Die Eigenbewegung des Fahrzeugs drückt sich in Form einer Relativgeschwindigkeit $(v_{x,virt}, v_{y,virt})$ im Fahrzeug-Koordinatensystem aus:

$$v_{x,virt} = -v_f + \Psi' * y_w$$

$$v_{y,virt} = -\Psi' * x_w$$

Das Fahrzeugkoordinatensystem hat dabei seinen Ursprung in der Mitte der Fahrzeughinterachse. Das Kamera-koordinatensystem ist gegenüber dem Fahrzeug-Koordinatensystem um

Delta x_cam
Delta y_cam
Delta Psi_cam

verschoben und verdreht. Dementsprechend ergibt sich die Geschwindigkeit im Kamera-Koordinatensystem aus

$$v\_x,virt,cam = v\_x,virt * \cos(-Delta\ Psi\_cam) + v\_y,virt * \sin(-Delta\ Psi\_cam)$$

$$v\_y,virt,cam = v\_x,virt * \sin(-Delta\ Psi\_cam) - v\_y,virt * \cos(-Delta\ Psi\_cam)$$

Positionen in Kamera-Koordinaten ergeben sich aus Fahrzeug-Koordinaten gemäß

$$x\_cam = (x\_w - Delta\ x\_cam) * \cos(-Delta\ Psi\_cam) + (y\_w - Delta\ y\_cam) * \sin(-Delta\ Psi\_cam)$$

$$y\_cam = (x\_w - Delta\ x\_cam) * \sin(-Delta\ Psi\_cam) - (y\_w - Delta\ y\_cam) * \cos(-Delta\ Psi\_cam)$$

Dabei ist $\Psi'$ die Gierrate und $v_f$ die Geschwindigkeit des Fahrzeugs. Der hypothetische optische Fluss $f_{stat}$ wird beschrieben durch

$$f_{stat} = k\,(y_1 * x_2 - y_2 * x_1)/(x_1 * x_2)$$

Dabei ist $(x_1, y_1)$ die Position des Objekts in Kamera-Koordinaten im aktuellen Kamerabild, $(x_2, y_2)$ ist die hypothetische Position im vorhergehenden Kamerabild und der Fluss f ist die Bewegung des Objekts um eine bestimmte Anzahl Spalten im Kamerabild. Für eine Stereokamera ergibt sich die Bildspalte u aus den Koordinaten im Kamerakoordinatensystem $(x_{cam}, y_{cam})$ über folgende Beziehung

$$u = p - k * (y_{cam}/x_{cam})$$

wobei p und k intrinsische Parameter der Kamera sind. Bezeichnet $u_1$ die Bildspalte des Objekts im aktuellen Kamerabild und $u_2$ die Bildspalte des Objekts im vorherigen Kamerabild ist der Fluss f die Differenz aus $u_2$ und $u_1$. Die hypothetische Position im vorhergehenden Kamerabild kann bestimmt werden, indem zunächst die hypothetische Position $(x_{2,w}, y_{2,w})$ relativ zum Fahrzeug bestimmt wird:

$$x_{2,w} = x_w - T * v_{x,virt}$$

$$y_{2,w} = y_w - T * v_{y,virt}$$

Dabei bezeichnet T die Zeitspanne, die zwischen zwei Kamerabildern vergeht. Die Position $(x_{2,w}, y_{2,w})$ kann anschließend in das Kamera-Koordinatensystem umgerechnet werden. Der berechnete hypothetische optische Fluss $f_{stat}$ jedes Objekts wird nun mit dem durch die Kamera gemessenen optischen Fluss verglichen. Stimmen die Werte bis auf eine Differenz, die sich aus der Messunsicherheit ergibt, überein, so handelt es sich bei dem Objekt um ein statisches Objekt. Andernfalls wird das Objekt als dynamisches Objekt kategorisiert. Zur Verringerung der Messunsicherheit kann die Berechnung über mehrere Kamerabilder hinweg durchgeführt werden und ein Mittelwert gebildet werden.

Wird in einer nicht erfindungsgemäßen Ausführungsform anstelle einer Stereokamera nur eine einfache Kamera verwendet, kann eine Kategorisierung der Objekte in statische und dynamische Objekte mit Hilfe einer Objekterkennung erfolgen. Werden z.B. Warnbaken, Verkehrsschilder oder Leitplanken in einer Bildregion erkannt, kann das Objekt als statisch eingestuft werden. Der Abstand zu einem Objekt kann ebenfalls aus einem einfachen zweidimensionalen Kamerabild abgeschätzt werden. Im einfachsten Fall kann dies dadurch geschehen, dass jeder Bildzeile über die bekannte Ausrichtung der Kamera eine Entfernung zugeordnet wird.

Erfindungsgemäß ist der zweite Umfeldsensortyp ein Ultraschallsensor. Ultraschallsensoren senden ein Ultraschallsignal aus und empfangen das von einem Objekt reflektierte Signalecho. Aus der Laufzeit des Signals und der bekannten Schallgeschwindigkeit kann dann der Abstand des Objekts zum Ultraschallsensor bestimmt werden.

Erfindungsgemäß ist der erste Umfeldsensortyp eine Stereokamera und der zweite Umfeldsensortyp ein Ultraschallsensor, wobei jeweils zwei Ultraschallsensoren zu jeder Seite des Fahrzeugs ausgerichtet sind und die Stereokamera nach vorne zeigt. Die über die Stereokamera ermittelte und anschließend über die bekannte Eigenbewegung des Fahrzeugs aktualisierte Position eines statischen Objekts wird bei der Vorbeifahrt des Fahrzeugs mit den über die jeweiligen Ultraschallsensoren ermittelten Positionen verglichen. Wenn mindestens zwei Ultraschallsensoren übereinstimmend von der Stereokamera abweichende Objektpositionen ermitteln, wird auf einen Fehler der Stereokamera geschlossen. Zeigt nur ein Ultraschallsensor abweichende Werte an, wird auf einen Fehler in diesem Ultraschallsensor geschlossen. Des Weiteren ist es denkbar, jedoch nicht beansprucht, erst dann auf einen Fehler der Stereokamera zu schließen, wenn mindestens einmal von jedem der vier Ultraschallsensoren ein von der Stereokamera abweichender Wert ermittelt wurde. Ein solcher Fehler kann beispielsweise durch eine fehlerhaften Kalibrierung eines Umfeldsensors oder einen Defekt eines Sensors verursacht werden.

Bevorzugt wird der Fahrer über einen festgestellten Fehler informiert. Erfindungsgemäß ist der betreffende Sensor deaktiviert.

In einer Ausführungsform des Verfahrens wird die Bewegung des Fahrzeugs über Radwegsensoren, Raddrehzahlsensoren, Gierratensensoren, Beschleunigungssensoren, sowie Satellitennavigation (z.B. GPS) ermittelt. Satellitennavigation kann die Schätzung der Bewegung des Fahrzeugs insbesondere dadurch verbessern, indem die globale Orientierung (global Heading) des Fahrzeugs verwendet wird.

Ein weiterer Aspekt der Erfindung betrifft eine Vorrichtung zur Überprüfung eines Umfelderfassungssystems eines Fahrzeugs, wobei das Umfelderfassungssystem mindestens zwei verschiedene Umfeldsensortypen umfasst und wobei die Vorrichtung ein Steuergerät umfasst, welches eingerichtet ist, Objekte mit einem ersten Umfeldsensortyp zu erfassen, die Objekte mit Hilfe der Daten des ersten Umfeldsensortyps in statische und dynamische Objekte zu kategorisieren, die relative Position der erfassten statischen Objekte relativ zum Fahrzeug zu bestimmen und diese mit der über einen zweiten Umfeldsensortyp ermittelten Position zu vergleichen, wobei bei einer Abweichung über einem vorgegebenen Grenzwert auf einen Fehler geschlossen wird und wobei der Sichtbereich des ersten Umfeldsensortyps nicht mit dem Sichtbereich des zweiten Umfeldsensortyps überlappt und das Steuergerät eingerichtet ist, die relative Position der erfassten statischen Objekte nach dem Verlassen des Sichtbereichs des ersten Umfeldsensortyps unter Berücksichtigung der Bewegung des Fahrzeugs zu aktualisieren.

Erfindungsgemäß ist der erste Umfeldsensortyp eine Stereokamera.

Erfindungsgemäß ist der zweite Umfeldsensortyp ein Ultraschallsensor. Denkbar sind auch Ausführungen des zweiten Umfeldsensortyps als Radar oder Lidar basierende Sensoren (jedoch nicht beansprucht). Die erfindungsgemäße Vorrichtung ist im Anspruch 4 beansprucht.

In einer Ausführungsform der Vorrichtung umfasst diese des Weiteren Mittel zur Erfassung der Bewegung des Fahrzeugs, wobei die Mittel ausgewählt sind aus Radwegsensoren, Gierratensensoren, Raddrehzahlsensoren, Beschleunigungssensoren, sowie Satellitennavigation (z.B. GPS).


Vorteile der Erfindung


Es wird ein Verfahren zur Überprüfung eines Umfelderfassungssystems eines Fahrzeugs bereitgestellt, bei dem die Messwerte zwei verschiedener Umfeldsensortypen miteinander verglichen werden können, ohne dass die Sichtbereiche der Sensoren überlappen müssen. Dadurch müssen keine zusätzlichen redundanten Sensoren am Fahrzeug angeordnet werden, wobei dennoch ein Fehler wie ein Defekt oder eine fehlerhafte Kalibrierung eines Sensors zuverlässig erkannt werden können.

Da auf die Anordnung zusätzlicher redundanter Umfeldsensoren verzichtet werden kann, lässt sich das vorgeschlagene Verfahren auch leicht in bestehende Systeme integrieren.

Erfindungsgemäß wird eine Stereokamera in Fahrtrichtung ausgerichtet und zwei Ultraschallsensoren sind jeweils an den Seiten des Fahrzeugs angeordnet: somit ermöglicht das Verfahren zudem bei dem Versagen eines Sensors diesen zu identifizieren. Eine Fehlersuche wird dadurch erheblich vereinfacht.

Kurze Beschreibung der Zeichnungen

Ausführungsbeispiele der Erfindung sind in den Zeichnungen dargestellt und in der nachfolgenden Beschreibung näher erläutert.

Es zeigen:

Figur 1 eine schematische Darstellung eines Fahrzeugs mit einem Umfelderfassungssystem,

Figur 2 Bild einer in Fahrtrichtung ausgerichteten Kamera,

Figur 3 gemessener und für statische Objekte erwarteter optischer Fluss für die in Figur 2 dargestellte Situation,

Figur 4 eine Draufsicht auf die in Figur 2 dargestellte Situation und

Figur 5 eine Draufsicht auf die in Figur 2 dargestellte Situation zu einem späteren Zeitpunkt.

Ausführungsformen der Erfindung

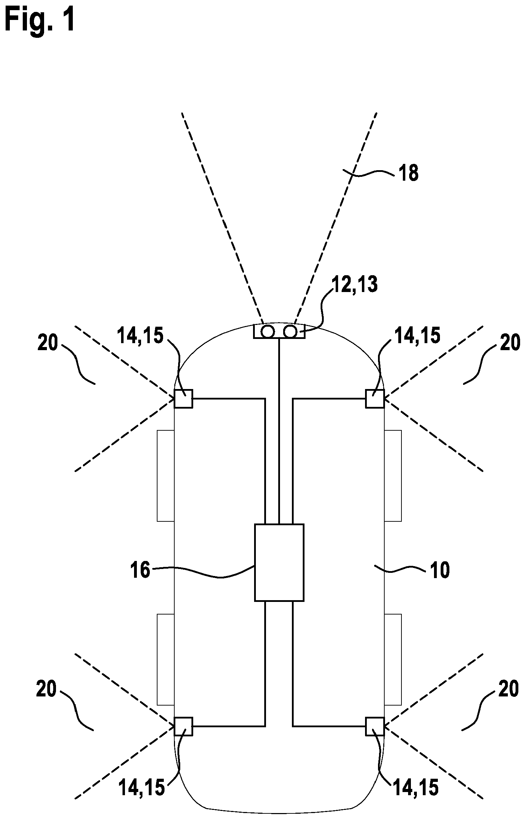

Figur 1 zeigt ein Fahrzeug mit einem Umfelderfassungssystem in einer schematischen Darstellung.

In Figur 1 ist ein Fahrzeug 10 dargestellt, welches mehrere Umfeldsensoren 12, 14 umfasst. Ein erster Umfeldsensortyp 12 ist in der dargestellten Ausführungsform als Stereokamera 13 ausgeführt. Die Stereokamera 13 ist in der Front des Fahrzeugs 10 angeordnet und in Fahrtrichtung ausgerichtet, so dass der Sichtbereich 18 der Stereokamera 13 ebenfalls in Fahrtrichtung weist. Innerhalb des Sichtbereichs 18 kann die Stereokamera 13 Objekte in der Umgebung des Fahrzeugs 10 erfassen. Des Weiteren ist ein zweiter Umfeldsensortyp 14 am Fahrzeug 10 angeordnet, der in der gezeigten Ausführungsform als Ultraschallsensoren 15 ausgeführt ist. Jeweils zwei Ultraschallsensoren 15 sind an jeder Seite des Fahrzeugs 10 angeordnet. Die Sichtbereiche 20 der Ultraschallsensoren 15 zeigen ebenfalls zu den jeweiligen Seiten.

Beide Sensortypen 12, 14 sind mit einem Steuergerät 16 verbunden, welches die Messdaten aller Sensoren auswertet und aus diesen eine Beschreibung der Umgebung des Fahrzeugs 10 generiert.

Andere nicht beanspruchte abweichende Ausgestaltungen der verwendeten Umfeldsensoren 14 sind denkbar. So kann beispielsweise ein Radar oder Lidar basierender Sensortyp als zweiter Umfeldsensortyp 14 verwendet werden. Ebenso ist es denkbar, mehr als zwei verschiedene Umfeldsensortypen einzusetzen.

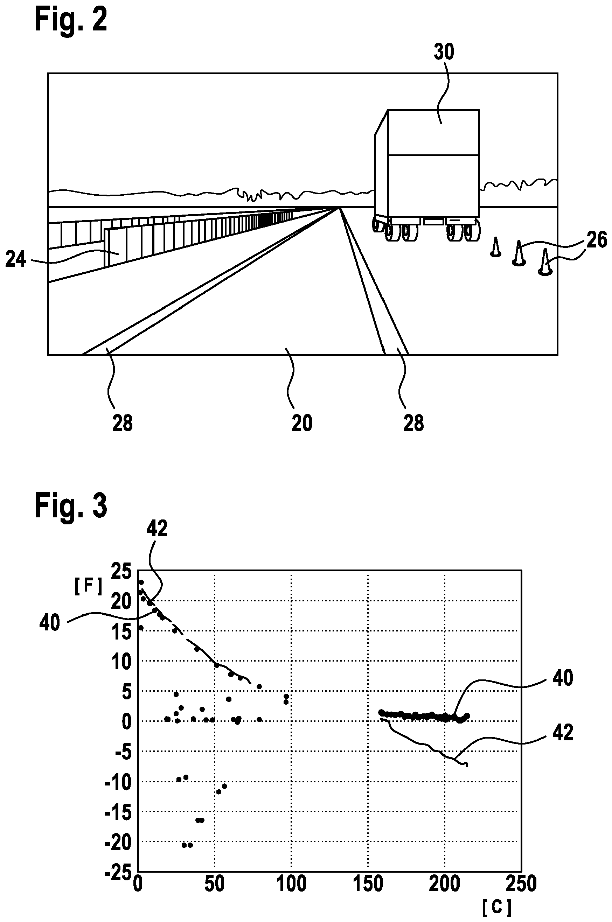

Figur 2 zeigt ein Bild einer in Fahrtrichtung ausgerichteten Kamera.

In Figur 2 ist ein Bild dargestellt, welches von einer Stereokamera aufgenommen wurde, die in der Front eines Fahrzeugs angeordnet und in Fahrtrichtung ausgerichtet ist. In dem Bild ist eine Straße 20 mit Fahrbahnmarkierungen 28 zu erkennen. Zur linken Seite ist die Straße von Leitplanken 24 begrenzt, auf der rechten Seite befinden sich Begrenzungskegel 26. Auf der rechten Fahrspur befindet sich ein weiterer Verkehrsteilnehmer in Form eines weiteren Fahrzeugs 30.

Bis auf das weitere Fahrzeug 30 sind alle sichtbaren Objekte statisch, dass heißt sie weisen keine Eigenbewegung auf. Nur das weitere Fahrzeug 30 ist ein dynamisches Objekt.

In Figur 3 ist der gemessene und der für statische Objekte erwartete optischer Fluss für die in Figur 2 dargestellte Situation dargestellt.

Figur 3 zeigt ein Diagramm, in dem auf der Y-Achse der optische Fluss F und auf der X-Achse die Spalte C im Kamerabild aufgetragen sind.

Als optischer Fluss F wird hier die Anzahl der Spalten angegeben, um die sich ein Objekt im Kamerabild von einem Bild zum nächsten Kamerabild bewegt hat. Ein positiver Wert bezeichnet dabei eine Bewegung nach links, ein negativer Wert eine Bewegung nach rechts im Kamerabild.

Die hier verwendete Kamera ist in einem Fahrzeug angeordnet und in Fahrtrichtung ausgerichtet. Die von der Kamera erfasst Verkehrssituation ist bereits bei der Figur 2 beschrieben worden. Der von der Kamera ermittelte optische Fluss ist als Kurve 40 in der Figur 3 eingezeichnet. Im linken Bereich des Bildes befinden sich Leitplanken, die keine Eigenbewegung aufweisen. Die Leitplanken sind parallel zur Straße ausgerichtet. Bildpunkte, die weiter von der Kamera entfernte Teile der Leitplanke darstellen, weisen einen geringen optischen Fluss auf - sie bewegen sich im Kamerabild nur langsam. Bildpunkte hingegen, die zu nahen Teilen der Leitplanke gehören (weiter links im Bild), weisen einen größeren optischen Fluss auf - sie bewegen sich schnell im Kamerabild.

Im rechten Bereich des Kamerabildes befindet sich mit dem weiteren Fahrzeug 30 ein dynamisches Objekt. Auch für dieses wird der optische Fluss ermittelt, Da sich das weitere Fahrzeug 30 fortbewegt, wobei seine Geschwindigkeit nur geringfügig kleiner als die des Fahrzeugs 10 ist, scheint es sich im Kamerabild nicht zu bewegen. Der gemessene optische Fluss ist fast Null.

In der Mitte der Figur 3 ist die Messkurve 40 für den optischen Fluss unterbrochen, da sich in der Mitte der Straße kein Objekt befindet und der Horizont für eine Messung zu weit entfernt liegt. Ferner ist aus der Figur 3 ersichtlich, dass zwar die überwiegende Mehrheit der Messpunkte für den optischen Fluss 40 auf einer Kurve liegen, jedoch aufgrund von Messunsicherheiten vereinzelt Punkte abweichen, wobei sich die meisten Messfehler um den Messwert 0 häufen.

Zur Kategorisierung der im Kamerabild erfassten Objekte in statische und dynamische Objekte wird für jedes Objekt ein hypothetischer optischer Fluss unter der Annahme berechnet, dass das Objekt statisch ist. Stimmen der gemessene optische Fluss und der hypothetische optische Fluss bis auf einen statistischen Fehler überein, so wird das Objekt als statisch kategorisiert. Der hypothetische optische Fluss ist in Figur 3 als Kurve 42 aufgetragen. Die Messdaten der Leitplanke stimmen sehr gut mit dem hypothetischen optischen Fluss 42 überein, die Leitplanke wird demnach als statisches Objekt eingestuft. Der dem weiteren Fahrzeug 30 zugeordnete optische Fluss weicht hingegen deutlich vom hypothetischen optischen Fluss 42 ab. Das weitere Fahrzeug wird demnach als dynamisches Objekt eingestuft.

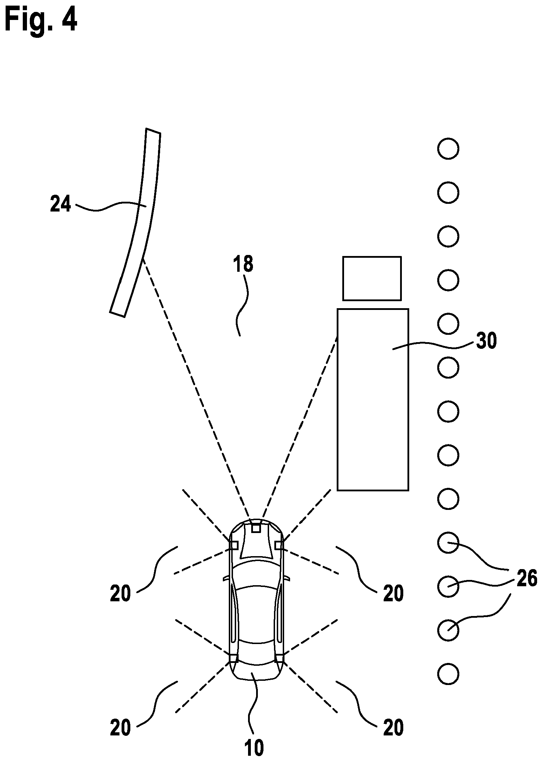

Figur 4 zeigt eine Draufsicht auf die in Figur 2 dargestellte Situation.

In Figur 4 ist die aus Figur 2 bekannte Verkehrssituation schematisch als Draufsicht dargestellt. Das Fahrzeug 10 befindet sich auf einer Straße 20. Der Sichtbereich 18 des ersten Umfeldsensortyps ist nach vorne ausgerichtet, die Sichtbereiche 20 des zweiten Sensortyps sind zu den Seiten des Fahrzeugs 10 ausgerichtet.

In der dargestellten Situation kann das Fahrzeug 10 mit der Leitplanke 24 und dem weiteren Fahrzeug 30 zwei Objekte im Sichtfeld 18 des ersten Sensortyps erfassen. Durch Auswerten des optischen Flusses wird die Leitplanke 24 als statisches Objekt eingestuft und deren Bewegung relativ zum Fahrzeug 10 weiter verfolgt. Das weitere Fahrzeug 30 wird als dynamisches Objekt eingestuft und bei der Überwachung der Umfeldsensoren nicht beachtet. Die Begrenzungskegel 26 sind zwar ebenfalls statisch, befinden sich hier jedoch nicht im Sichtbereich 18 des ersten Sensortyps.

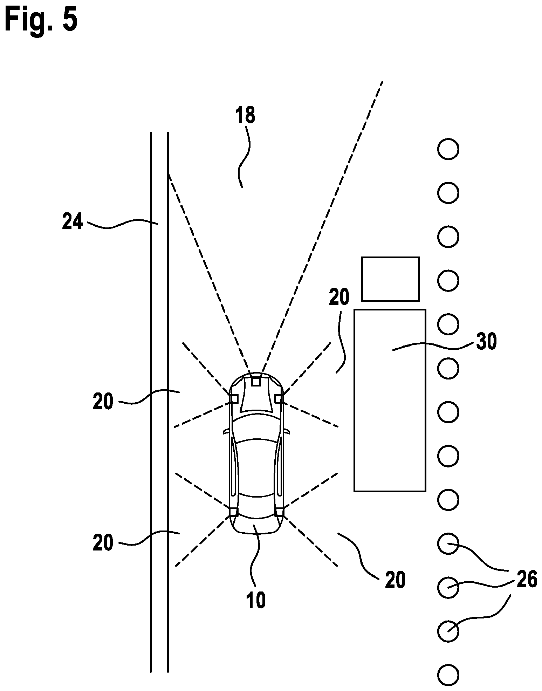

Figur 5 zeigt eine Draufsicht auf die in Figur 2 dargestellte Situation zu einem späteren Zeitpunkt.

In der Figur 5 wird dieselbe Verkehrssituation wie in Figur 2 und in Figur 4 dargestellt, jedoch zu einem späteren Zeitpunkt. Das Fahrzeug 10 ist dabei das weitere Fahrzeug 30 zu überholen, so dass sich das weitere Fahrzeug 30 rechts vom Fahrzeug 10 und im Sichtbereich 20 des zweiten Umfeldsensortyps befindet. Da sich das Fahrzeug 10 fortbewegt hat, befindet sich die zuvor bereits als statisches Objekt eingestufte Leitplanke 24 nun links neben dem Fahrzeug 10 und damit ebenfalls im Sichtbereich 20 des zweiten Umfeldsensortyps.

Seit dem ersten Erfassen der Leitplanke 24 durch den ersten Umfeldsensortyp wurde ihre relative Position zum Fahrzeug 10 ständig aktualisiert, wobei für die Teile, die sich nicht mehr im Sichtbereich des ersten Umfeldsensortyps befinden, die Eigenbewegung des Fahrzeugs 10 herangezogen wurde.

Die relative Position der Leitplanke 24, die mit dem ersten Umfeldsensortyp ermittelt wurde, wird jetzt mit den durch den zweiten Umfeldsensortyp ermittelten Position verglichen, wobei bei einer Vorbeifahrt, wie sie in der Figur 5 dargestellt ist, beide Sensoren des zweiten Umfeldsensortyps die Position der Leitplanke nacheinander messen.

Stimmen alle Messergebnisse überein, das heißt die Differenzen liegen unter einem vorgegebenen Grenzwert, so arbeitet das Umfelderfassungssystem des Fahrzeugs 10 einwandfrei. Messen beiden Sensoren des zweiten Umfeldsensortyps übereinstimmend einen vom ersten Umfeldsensortyp abweichenden Wert, so wird auf einen Fehler des ersten Umfeldsensortyps geschlossen. Wird nur von einem Sensor des zweiten Umfeldsensortyps eine abweichende relative Position ermittelt, so wird auf einen Fehler dieses Sensors geschlossen.

**Patentansprüche**

1. Verfahren zur Überprüfung eines Umfelderfassungssystems eines Fahrzeugs (10), wobei das Umfelderfassungssystem mindestens zwei verschiedene Umfeldsensortypen (12, 14) umfasst und wobei Objekte (24, 26, 28, 30) im Umfeld des Fahrzeugs (10) mit einem ersten Umfeldsensortyp (12) erfasst werden, die Objekte (24, 26, 30) mit den Daten des ersten Umfeldsensortyps (12) in statische (24, 26) und dynamische Objekte (30) kategorisiert werden, die relative Position der erfassten statischen Objekte (24) zum Fahrzeug (10) bestimmt wird, diese Position mit einer über einen zweiten Umfeldsensortyp (14) ermittelten Position verglichen wird und wenn die Differenz größer als ein vorgegebener Grenzwert ist auf einen Fehler geschlossen wird, **dadurch gekennzeichnet, dass** der Sichtbereich (18) des ersten Umfeldsensortyps (12) nicht mit dem Sichtbereich (20) des zweiten Umfeldsensortyps (14) überlappt und die relative Position der erfassten statischen Objekte (24, 26) nach dem Verlassen des Sichtbereichs (18) des ersten Umfeldsensortyps (12) unter Berücksichtigung der Bewegung des Fahrzeugs (10) aktualisiert wird, wobei der erste Umfeldsensortyp (12) eine Stereokamera (13) ist und der zweite Sensortyp (14) ein Ultraschallsensor (15) ist, wobei jeweils zwei Ultraschallsensoren (15) zu jeder Seite des Fahrzeugs (10) ausgerichtet sind und die Stereokamera (13) nach vorne zeigt, wobei auf einen Defekt der Stereokamera (13) geschlossen wird, wenn mindestens zwei Ultraschallsensoren (15) übereinstimmend von der Stereokamera (13) abweichende Objektpositionen ermitteln und, wenn nur ein Ultraschallsensor abweichende Werte zeigt, auf einen Fehler in diesem Ultraschallsensor (15) geschlossen wird und, wobei der betreffende Sensor deaktiviert wird.

**2.** Verfahren nach Anspruch 1, **dadurch gekennzeichnet, dass** die Kategorisierung erfasster Objekte (24, 26, 30) in statische (24, 26) und dynamische Objekte (30) mittels Vergleichen des gemessenen optischen Flusses (40) im Kamerabild mit dem für statische Objekte (24, 26) erwarteten optischen Fluss (42) erfolgt.

**3.** Verfahren nach Anspruch 1 oder 2, **dadurch gekennzeichnet, dass** die Bewegung des Fahrzeugs (10) über Radwegsensoren, Raddrehzahlsensoren, Gierratensensoren, Beschleunigungssensoren, sowie Satellitennavigation (z.B. GPS) ermittelt wird.

**4.** Vorrichtung zur Überprüfung eines Umfelderfassungssystems eines Fahrzeugs (10), wobei das Umfelderfassungssystem mindestens zwei verschiedene Umfeldsensortypen (12, 14) umfasst und wobei die Vorrichtung ein Steuergerät (16) umfasst, welches eingerichtet ist, Objekte (24, 26, 30) mit einem ersten Umfeldsensortyp (12) zu erfassen, die Objekte (24, 26, 30) mit Hilfe der Daten des ersten Umfeldsensortyps (12) in statische (24, 26) und dynamische Objekte (30) zu kategorisieren, die relative Position der erfassten statischen Objekte (24, 26) zum Fahrzeug (10) zu bestimmen und diese mit der über einen zweiten Umfeldsensortyp (14) ermittelten Position zu verglichen, und wenn die Differenz größer als ein vorgegebener Grenzwert ist auf einen Fehler geschlossen wird, **dadurch gekennzeichnet, dass** der Sichtbereich (18) des ersten Umfeldsensortyps (12) nicht mit dem Sichtbereich (20) des zweiten Umfeldsensortyps (14) überlappt und dass das Steuergerät (16) eingerichtet ist, die relative Position der erfassten statischen Objekte (24, 26) nach dem Verlassen des Sichtbereichs (18) des ersten Umfeldsensortyps (12) unter Berücksichtigung der Bewegung des Fahrzeugs (10) zu aktualisieren, wobei der erste Umfeldsensortyp (12) eine Stereokamera (13) ist und der zweite Sensortyp (14) ein Ultraschallsensor (15) ist, wobei jeweils zwei Ultraschallsensoren (15) zu jeder Seite des Fahrzeugs (10) ausgerichtet sind und die Stereokamera (13) nach vorne zeigt, wobei auf einen Defekt der Stereokamera (13) geschlossen wird, wenn mindestens zwei Ultraschallsensoren (15) übereinstimmend von der Stereokamera (13) abweichende Objektpositionen ermitteln und, wenn nur ein Ultraschallsensor abweichende Werte zeigt, auf einen Fehler in diesem Ultraschallsensor (15) geschlossen wird und wobei der betreffende Sensor deaktiviert wird.

**5.** Vorrichtung nach Anspruch 4, **dadurch gekennzeichnet, dass** die Vorrichtung des Weiteren Mittel zur Erfassung der Bewegung des Fahrzeugs (10) umfasst, die ausgewählt sind aus Radwegsensoren, Raddrehzahlsensoren, Gierratensensoren, Beschleunigungssensoren, sowie Satellitennavigation (z.B. GPS) ermittelt oder eine Kombination mehrerer dieser Mittel.

**Claims**

**1.** Method for checking an environment capture system of a vehicle (10), wherein the environment capture system comprises at least two different environmental sensor types (12, 14), and wherein objects (24, 26, 28, 30) in the environment of the vehicle (10) are captured using a first environmental sensor type (12), the objects (24, 26, 30) are categorized as static objects (24, 26) and dynamic objects (30) using the data from the first environmental sensor type (12), the relative position of the captured static objects (24) with respect to the vehicle (10) is determined, this position is compared with a position determined using a second environmental sensor type (14), and a fault is inferred if the difference is greater than a predefined limit value, **characterized in that** the field of vision (18) of the first environmental sensor type (12) does not overlap the field of vision (20) of the second environmental sensor type (14), and the relative position of the captured static objects (24, 26) is updated after leaving the field of vision (18) of the first environmental sensor type (12) taking into account the movement of the vehicle (10), wherein the first environmental sensor type (12) is a stereo camera (13) and the second sensor type (14) is an ultrasonic sensor (15), wherein two ultrasonic sensors (15) are each oriented on each side of the vehicle (10) and the stereo camera (13) points forward, wherein a defect of the stereo camera (13) is inferred if at least two ultrasonic sensors (15) determine, in a corresponding manner, object positions which differ from the stereo camera (13), and, if only one ultrasonic sensor shows differing values, a fault in this ultrasonic sensor (15) is inferred, and wherein the relevant sensor is deactivated.

**2.** Method according to Claim 1, **characterized in that** captured objects (24, 26, 30) are categorized as static objects (24, 26) and dynamic objects (30) by comparing the measured optical flow (40) in the camera image with the optical flow (42) expected for static objects (24, 26) .

**3.** Method according to Claim 1 or 2, **characterized in that** the movement of the vehicle (10) is determined using wheel travel sensors, wheel speed sensors, yaw rate sensors, acceleration sensors and satellite navigation (for example GPS).

**4.** Apparatus for checking an environment capture system of a vehicle (10), wherein the environment capture system comprises at least two different environmental sensor types (12, 14), and wherein the apparatus comprises a control device (16) which is configured to capture objects (24, 26, 30) using a first environmental sensor type (12), to categorize the objects (24, 26, 30) as static objects (24, 26) and dynamic objects (30) with the aid of the data from the first environmental sensor type (12), to determine the relative position of the captured static objects (24, 26) with respect to the vehicle (10) and to compare this position with the position determined using a second environmental sensor type (14), and a fault is inferred if the difference is greater than a predefined limit value, **characterized in that** the field of vision (18) of the first environmental sensor type (12) does not overlap the field of vision (20) of the second environmental sensor type (14), and **in that** the control device (16) is configured to update the relative position of the captured static objects (24, 26) after leaving the field of vision (18) of the first environmental sensor type (12) taking into account the movement of the vehicle (10), wherein the first environmental sensor type (12) is a stereo camera (13) and the second sensor type (14) is an ultrasonic sensor (15), wherein two ultrasonic sensors (15) are each oriented on each side of the vehicle (10) and the stereo camera (13) points forward, wherein a defect of the stereo camera (13) is inferred if at least two ultrasonic sensors (15) determine, in a corresponding manner, object positions which differ from the stereo camera (13), and, if only one ultrasonic sensor shows differing values, a fault in this ultrasonic sensor (15) is inferred, and wherein the relevant sensor is deactivated.

**5.** Apparatus according to Claim 4, **characterized in that** the apparatus also comprises means for capturing the movement of the vehicle (10) which are selected from wheel travel sensors, wheel speed sensors, yaw rate sensors, acceleration sensors and satellite navigation (for example GPS) or a combination of a plurality of these means.

## Revendications

**1.** Procédé de vérification d'un système de détection de l'environnement d'un véhicule (10), dans lequel le système de détection d'environnement comprend au moins deux types différents de capteurs d'environnement (12, 14) et dans lequel des objets (24, 26, 28, 30) sont détectés dans l'environnement du véhicule (10) au moyen d'un premier type de capteur d'environnement (12), les objets (24, 26, 30) sont classés en objets statiques (24, 26) et dynamiques (30) au moyen des données du premier type de capteur d'environnement (12), la position relative des objets statiques détectés (24) par rapport au véhicule (10) est déterminée, ladite position est comparée à une position déterminée par l'intermédiaire d'un second type de capteur d'environnement (14) et lorsque la différence est supérieure à une valeur limite prédéterminée, il en est conclu qu'une erreur se produit, **caractérisé en ce que** le champ de vision (18) du premier type de capteur d'environnement (12) ne chevauche pas le champ de vision (20) du second type de capteur d'environnement (14) et la position relative des objets statiques détectés (24, 26) est actualisée après la sortie du champ de vision (18) du premier type de capteur d'environnement (12) en tenant compte du mouvement du véhicule (10), dans lequel le premier type de capteur d'environnement (12) est une caméra stéréoscopique (13) et le second type de capteur (14) est un capteur à ultrasons (15), dans lequel chacun des deux capteurs à ultrasons (15) est orienté sur chaque côté du véhicule (10) et la caméra stéréoscopique (13) est orientée vers l'avant, dans lequel il est conclu qu'un défaut de la caméra stéréoscopique (13) se produit lorsqu'au moins deux capteurs à ultrasons (15) déterminent de manière concordante des positions d'objet qui s'écartent de la caméra stéréoscopique (13) et, lorsqu'un seul capteur à ultrasons présente des valeurs différentes, il en est conclu qu'un défaut se produit dans ledit capteur à ultrasons (15), le capteur concerné étant alors désactivé.

**2.** Procédé selon la revendication 1, **caractérisé en ce que** le classement d'objets détectés (24, 26, 30) en objets statiques (24, 26) et dynamiques (30) est effectué en comparant le flux optique mesuré (40) dans l'image de caméra au flux optique attendu (42) pour des objets statiques (24, 26).

**3.** Procédé selon la revendication 1 ou 2, **caractérisé en ce que** le mouvement du véhicule (10) est déterminé par l'intermédiaire de capteurs de trajectoire de roue, de capteurs de vitesse de roue, de capteurs de vitesse de lacet, de capteurs d'accélération, ainsi que d'un système de navigation par satellite (par exemple GPS) .

**4.** Dispositif de vérification d'un système de détection de l'environnement d'un véhicule (10), dans lequel le système de détection d'environnement comprend au moins deux types différents de capteurs d'environnement (12, 14) et le dispositif comprenant un appareil de commande (16) conçu pour détecter des objets (24, 26, 30) au moyen d'un premier type de capteur d'environnement (12), classer les objets (24, 26, 30) en objets statiques (24, 26) et dynamiques (30) à l'aide des données du premier type de capteur d'environnement (12), déterminer la position relative des objets statiques détectés (24, 26) par rapport au véhicule (10) et la comparer à la position déterminée par l'intermédiaire d'un second type de capteur d'environnement (14) et lorsque la différence est supérieure à une valeur limite prédéterminée, en conclure qu'une erreur se produit, **caractérisé en ce que** le champ de vision (18) du premier type de capteur d'environnement (12) ne chevauche pas le champ de vision (20) du second type de capteur d'environnement (14) et **en ce que** l'appareil de commande (16) est conçu pour actualiser la position relative des objets statiques détectés (24, 26) après la sortie du champ de vision (18) du premier type de capteur d'environnement (12) en tenant compte du mouvement du véhicule (10), dans lequel le premier type de capteur d'environnement (12) est une caméra stéréoscopique (13) et le second type de capteur (14) est un capteur à ultrasons (15), dans lequel chacun des deux capteurs à ultrasons (15) est orienté sur chaque côté du véhicule (10) et la caméra stéréoscopique (13) est orientée vers l'avant, dans lequel il est conclu qu'un défaut de la caméra stéréoscopique (13) se produit lorsqu'au moins deux capteurs à ultrasons (15) déterminent de manière concordante des positions d'objet qui s'écartent de la caméra stéréoscopique (13) et, lorsqu'un seul capteur à ultrasons présente des valeurs différentes, il en est conclu qu'un défaut se produit dans ledit capteur à ultrasons (15), le capteur concerné étant alors désactivé.

5. Dispositif selon la revendication 4, **caractérisé en ce que** le dispositif comprend en outre des moyens destinés à détecter le mouvement du véhicule (10), qui sont sélectionnés parmi des capteurs de trajectoire de roue, des capteurs de vitesse de roue, des capteurs de vitesse de lacet, des capteurs d'accélération, ainsi qu'un système de navigation par satellite (par exemple GPS) ou une combinaison de plusieurs desdits moyens.

# Fig. 1

# Fig. 2

# Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10229336 A1
- WO 2004072901 A1
- DE 102010051602 A1
- DE 102008038731 A1